# EUROPÄISCHE PATENTSCHRIFT

(11) **EP 0 730 508 B1**
(45) Veröffentlichungstag und Bekanntmachung des Hinweises auf die Patenterteilung: **17.09.1997**
(21) Anmeldenummer: 95901391.3
(22) Anmeldetag: 17.11.1994
(51) Int. Cl.: B23K 26/00

(54) **VERFAHREN ZUM HERSTELLEN VON RÖHRENFÖRMIGEN ROHLINGEN AUS FEIN- ODER FEINSTBLECH**
PROCESS FOR MANUFACTURING TUBULAR MOULDED BLANKS FROM THIN PLATE OR BLACK PLATE
PROCEDE DE PRODUCTION D'EBAUCHES TUBULAIRES EN TOLE MINCE OU EN TOLE NOIRE

(30) Priorität: 22.11.1993 DE 4339661
(43) Veröffentlichungstag der Anmeldung: 11.09.1996
(73) Patentinhaber: Büchler, Alexander, D-81377 München (DE); Krause, Volker, 53639 Königswinter (DE); Ollier, Bernard, 50999 Köln (DE)
(72) Erfinder: Büchler, Alexander, D-81377 München (DE); Krause, Volker, 53639 Königswinter (DE); Ollier, Bernard, 50999 Köln (DE)
(74) Vertreter: Grimm, Ekkehard, Dipl.-Phys.
(86) Internationale Anmeldenummer: EP9403814
(87) Internationale Veröffentlichungsnummer: WO9514549

(56) Entgegenhaltungen:
- DE-A- 2 701 427
- US-A- 4 826 269

## Beschreibung

Die vorliegende Erfindung betrifft ein Verfahren zum Herstellen von röhrenförmigen Rohlingen aus Fein- oder Feinstblech, insbesondere von zylindrischen Dosen-Rohlingen bzw. Zargen, bei dem zwei Längskanten eines vorgeformten Blechs zueinander ausgerichtet und in Bezug zu einem Fokussierungsbereich einer Laseranordnung positioniert und anschließend diese ausgerichteten Längskanten durch Beaufschlagung von Laserstrahlung unter Bildung einer Längsnaht miteinander verschweißt werden.

Solche Verfahren zum Herstellen von Dosen-Rohlingen, die auch als Dosen-Zargen bezeichnet werden, sind allgemein im Bereich der Verpackungsindustrie bekannt.

Seit der Einführung der Kunststoffe als Verpackung vor fünfundzwanzig Jahren liegt der Anteil der Metalldosen als Verpackungsbehältnisse bei etwa dreißig Prozent.

Bei der Herstellung von röhrenförmigen Fein- oder Feinstblechkörpern, insbesondere von Dosen, wird heute üblicherweise das Widerstandspreßschweißen angewandt. Dabei wird zunächst ein ebener Blechzuschnitt, dessen eine Kantenlänge der Höhe der herzustellenden Dose und dessen andere Kantenlänge dem Umfang der herzustellenden Dosen entspricht, röhrenförmig gebogen bzw. gewalzt. An der Längsnaht wird das Blech überlappt und punktförmig unter Druck einer elektrischen Wechsel spannung ausgesetzt. An der Kontaktstelle der Blechränder, die übereinander liegen, wird der röhrenförmige Zuschnitt dann verschweißt. Mit diesem Verfahren können hohe Schweißgeschwindigkeiten in der Größenordnung von ca. 100 Meter pro Minute erzielt werden. Dieses Verfahren erfordert jedoch, um die beim Widerstandspreßschweißen eingesetzten Kontaktrollen materialfrei zu halten, daß Kupferdrähte zwischen Blech und Kontaktrollen angeordnet werden, die auch schmelzendes Zinn aufnehmen. Diese Kupferdrähte, die durch das aufschmelzende Zinn verunreinigt werden, können nach der Schweißung nicht für weitere Schweißungen benutzt werden. Aus diesem Grund wird dieses Verfahren auch unter dem Namen "Wire-Lost" -Verfahren geführt. Um reproduzierbare Nahtverschweißungen zu erhalten, ist eine hohe Präzision der Ausrichtung der zu verschweißenden Nahtkanten und der einzuhaltenden Verfahrensparameter erforderlich.

Hinzu kommt, daß die Nahtbereiche überlappend ausgebildet werden. Dabei entsteht im Nahtbereich eine Materialanhäufung, die 1,4 mal so dick wie die des Rumpfmaterials ist. Die nachfolgenden Verarbeitungsschritte müssen auf diese Verdickung ausgelegt werden.

Eine weitere Problemstelle bei solchen Dosen aus Weißblech ist eine im Lebensmittelbereich geforderte Lackbeschichtung zumindest auf der Innenseite der Dose, die im Bereich der Nahtkante nach dem Verschweißen aufgebracht werden muß. Eine gleichmäßige Beschichtung der überlappenden Kanten ist nach dem Verschweißen nicht gegeben. Weiterhin werden bei den ständig zu verzeichnenden Zuwachsraten im Bereich der Verpackungsindustrie Prozeßgeschwindigkeiten gefordert, die mit Prozeßgeschwindigkeiten der heutigen Dosenfertigungen bei 100 m/min nicht mit dem Widerstandsschweißen erfüllt werden können.

Bereits 1976 ist man dazu übergegangen, das Widerstandsschweißen mit Kontaktrollen, wie es vorstehend beschrieben ist, durch das Laserschweißen zu ersetzen; ein solches Verfahren ist in der DE-OS 27 01 427 angegeben. Nach diesem Verfahren wird ein rechteckiger Zuschnitt zylindrisch derart gebogen, daß seine Seitenkanten stumpf gegeneinander stehen. Sie werden dann mit einem punktförmigen, relativ zum Werkstück bewegten Laserstrahl miteinander verschweißt. Es hat sich jedoch gezeigt, daß mit diesem Verfahren die Prozeßgeschwindigkeiten nicht über etwa 80 m/min liegen. Darüberhinaus entsteht, insbesondere bei höheren Schweißgeschwindigkeiten, ein Aufwallen der Schmelze entlang der Naht, was wiederum zu einer ungleichmäßigen Naht führt. Dieser Effekt ist unter dem Namen "Humping-Effekt" bekannt. Ein weiteres Problem, das mit hohen Prozeßgeschwindigkeiten verbunden ist, stellt die exakte Relativbewegung des Dosen-Rohlings zu dem Laser dar, mit dem Ergebnis, daß bereits geringe Fehlausrichtungen und/oder Erschütterungen beim Bewegen des Dosen-Rohlings zu fehlerhaften und damit zu nicht lackierten Längsnähten führen.

In den letzten Jahren sind vermehrt Anordnungen und Verfahren zum Verschweißen von Blechteilen aus Feinblech entlang ihrer Längsnaht vorgeschlagen worden.

So gibt beispielsweise die DE-OS 36 00 532 ein Verfahren zur Herstellung eines Behälters aus dünnem Blech, wie dünnerem Feinblech und/oder Feinstblech, an, bei dem die Längskantenbereiche eines Rohlings überlappend ausgerichtet und ohne gesondertes Schweißmittel unter Aufschmelzung des Materials miteinander verschweißt werden. Diese Verschweißung erfolgt entweder in einem mittleren Bereich der Überlappung oder an den parallel zueinander ausgerichteten Stirnkanten der Längskantenbereiche; nach dem Verschweißen wird der Überlappungsbereich zusätzlich noch gefalzt oder eingedreht, so daß ein formstabilisierender Wulst entsteht.

Die DE-OS 32 06 210 sieht ein Verfahren und eine Vorrichtung zum Herstellen an beiden Seiten offener, metallischer Behälterzargen mit mit Laserstrahl geschweißter Längsnaht vor. Die zu verschweißenden Längskanten werden in einer Halte- oder Klemmanordnung überlappend zueinander ausgerichtet und mittels Laserstrahl etwa in der Mitte der Überlappung miteinander verschweißt. Anschließend wird der überstehende Teil mit einem weiteren Laserstrahl abgetrennt. Dieses Verfahren ist durch den zusätzlichen Abtrenn-Verfahrensschritt aufwendig und eignet sich daher nicht für hohe Prozeßgeschwindigkeiten. Außerdem kann entlang der Trennkante eine scharfe Kante oder ein scharfer Grad entstehen, der als nachteilig anzusehen ist.

Die DE-OS 34 07 417 sieht ein Verfahren und eine Vorrichtung zum Verschweißen der Längskanten eines Dosenmantels vor, bei dem die Kanten während des Verschweißens an den Stirnseiten gegeneinander gedrückt werden und das Dosenblech mindestens rechts und links von der zu verschweißenden Fuge senkrecht zum Dosenmantel gegen eine Auflage gedrückt wird. Der Laserstrahl und der zu verschweißende Dosen-Rohling werden relativ zueinander bewegt, wobei die Schweißgeschwindigkeit zwischen 20 und 80 m/min liegen soll. Für die Ausrichtung der zu verschweißenden Längskanten werden die zu verschweißenden Längskanten zunächst in eine X-Schiene eingelegt, die Kanten verklemmt und anschließend die X-Schiene entfernt, so daß ein Spalt zwischen den beiden Stirnkanten entsteht, der anschließend geschlossen werden muß.

Die DE-OS 36 30 889 stellt wiederum das überlappende Verschweißen der zu verbindenden Längskanten als vorteilhaft dar. Gemäß dieser Druckschrift werden die Seitenkanten so übereinanderliegend ausgerichtet, daß der untere Kantenbereich und der darüberliegende, überlappende obere Kantenbereich jeweils in einer Ebene verlaufen, die unter einem Winkel zueinander ausgerichtet sind. Da der obere Kantenbereich in dieser Ausrichtung winklig zu dem unteren Kantenbereich absteht, kann von außen zwischen die beiden Kanten Laserstrahlung eingestrahlt werden, die die beiden Längskanten an der innen liegenden Berührungslinie miteinander verschweißen. Der außen überstehende Flächenabschnitt muß anschließend, nach dem Verschweißen, bearbeitet werden; er wird entweder abgetrennt oder in irgendeiner Form umgebörtelt oder an die Dosenwand angedrückt.

Die DE-OS 36 32 952 gibt ebenfalls ein Verfahren und eine Vorrichtung zur kontinuierlichen Herstellung von rohrförmigen Körpern mit Laser-Längsnahtschweißung an, wobei Werkstück und Laserstrahl relativ zueinander entlang der Schweißnaht bewegt werden, und zwar unter Bildung einer schmalen Schmelzzone.

Die DE 37 03 270 gibt ein Verfahren zur Herstellung eines Behälters mit stumpfgeschweißter Längsnaht an, gemäß dem die zu verschweißenden Längskanten zunächst auf Abstand gehalten und in der Schweißzone unter einem spitzen Winkel zusammengeführt und nach dem Verschweißen die Kanten gegeneinander tangential zusammengepreßt werden, bis die Schweißnaht abgekühlt ist.

Die DE-OS 39 01 319 beschreibt ein Verfahren, bei dem zwei Bleche überlappend zueinander an den zu verschweißenden Kanten ausgerichtet und durch Walzen und durch Aufschmelzen der überlappenden Bereiche verbunden werden. Dieses Verfahren erfordert zum einen eine aufwendige Walzenanordnung und eine Relativbewegung der zu verbindenden Teile und der Walzen gegeneinander, darüberhinaus ist dieses Verfahrens nur schwer in Verbindung mit rohrförmigen Rohlingen, die an ihren Längskanten miteinander verschweißt werden sollen, geeignet.

Ein weiteres Verfahren, bei dem die zu verschweißenden Längskanten überlappend zueinander ausgerichtet, verschweißt und die überlappenden Bereiche abgetrennt werden, ist aus der DE-OS 38 28 341 bekannt.

Ausgehend von dem vorstehend angegebenen Stand der Technik liegt der vorliegenden Erfindung die Aufgabe zugrunde, ein Verfahren zum Herstellen von röhrenförmigen Rohlingen aus Fein- oder Feinstblech anzugeben, das die Nachteile des Widerstandspreßschweißens vermeidet, andererseits im Hinblick auf Laserschweißverfahren Schweißgeschwindigkeiten über 100 m/min ermöglicht.

Die vorstehende Aufgabe wird bei einem Verfahren der eingangs angegebenen Art dadurch gelöst, daß die Verschweißung mit einem im Fokussierungsbereich langgestreckten Laserstrahl, dessen Länge einem Vielfachen seiner Breite im Fokussierungsbereich entspricht, von der Außen- und/oder Innenseite ausgeführt wird. Mit einem derartig geformten Diodenlaserstrahl kann eine Verschweißung der Längskanten des Dosen-Rohlings bzw. der Dosen-Zarge erfolgen, ohne daß die beiden Teile relativ zueinander bewegt werden müssen. Hierbei kommt unterstützend hinzu, daß ein Diodenlaser typischerweise einen elliptischen Strahlquerschnitt besitzt; die Schweißnaht liegt parallel zu dem pn-Übergang der Dioden. Diese Strahldivergenzen können durch optische Einrichtungen fokusiert oder durch eine Mehrfachanordnung von Laserdioden in der Längsrichtung der zu verschweißenden Naht noch erweitert bzw. senkrecht dazu zusätzlich fokusiert werden, um die Strahlgeometrie exakt den Erfordernissen beim Verschweißen der Längskanten eines Dosen-Rohlings vorteilhaft anzupassen, so daß die Strahlbeaufschlagung nur im Schweißbereich erfolgt. Vorteilhaft hierbei ist, daß bei entsprechender Ausdehnung oder entsprechendem Aufbau der Diodenlaseranordnung, die zum Verschweißen eingesetzt wird, die Längserstreckung des Strahls in Richtung der Längsnaht ausgerichtet wird und daß während der Verschweißung die vorgegebenen Koordinaten sowohl der Längskanten des Blech als auch des Fokussierungsbereichs relativ zueinander beibehalten werden. Mit einer solchen stationären Verschweißung können sehr hohe Schweißgeschwindigkeiten erzielt werden, darüberhinaus treten nicht die Probleme des "Humping-Effekts", d.h. des Aufwallens der Schmelze eines punktförmig fokusierten, entlang der Schweißnaht verlaufenden Laserstrahls, auf. Weiterhin tritt mit einer solchen Anordnung eine gleichmäßige Erwärmung der Randzonen der miteinander zu verschweißenden Längskanten auf, so daß kein Verzug durch unterschiedliches und/oder aufeinanderfolgendes Aufwärmen und Abkühlen entlang der Längsnaht erfolgt. Es hat sich gezeigt, daß mit einer solchen Schweißanordnung, inbesondere im Hinblick darauf, daß durch die stationäre Anordnung eine gleichmäßige Erwärmung der zu verschweißenden Zonen des Blechrohlings bis auf die Schweißtemperatur und ein anschließendes gleichmäßiges Abkühlen erfolgt, die beiden Längskanten der Dosen-Zarge stumpf aneinanderstoßend ausgerichtet werden können. Gerade im Hinblick auf ein gleichmäßiges, schonendes Aufheiz-, Schweiß- und Abkühlprofil entlang der Längsnaht und quer zu der erstellenden Längsnaht kann es von Vorteil sein, vor, während und/oder nach der Verschweißung die Nachbarbereiche der Längskanten einer Wärmebehandlung zu unterwerfen, die vorzugsweise mit der Laserstrahlung derselben Laseranordnung vorgenommen wird, die auch zum Verschweißen der Längskanten eingesetzt wird. In einer solchen Verfahrensweise verbleibt der Dosen-Rohling während des gesamten Erwärmungs- und/oder Abkühlvorgangs in derselben koordinatenmäßigen Ausrichtung, wie sie auch zum Verschweißen der Längskanten beibehalten wird.

Da während der Verschweißung die koordinatenmäßige Ausrichtung der Längskanten relativ zu dem Fokussierungsbereich dieser Strahlung nicht verändert wird, kann gegebenenfalls in einfacher Weise den Koordinaten der Längskanten eine von der Laseranordnung für das Verschweißen unabhängige Erwärmungseinrichtung zugeordnet werden. Insbesondere mit einer Mehrfachdiodenlaseranordnung, deren Laserdioden quer zu der Längsnaht, die zu erstellen ist, zugeordnet sind, kann die Diodenstrahlung in einen hochenergetischen Schweiß-Strahlungsbereich und beidseitig dazu in einen Erwärmungs-Strahlungsbereich geringerer Energie aufgeteilt werden. Eine sogenannte Multi-Diodenlaseranordnung oder ein Multi-Diodenlaserbarren, also eine Diodenlaseranordnung aus einer Vielzahl von Laserdioden, wird verwendet, die unterschiedlichen Koordinaten entlang den Längskanten zugeordnet sind und die zusammen einen langgestreckten Laserstrahl ergeben, der darüberhinaus durch eine unterschiedliche Ausrichtung und leistungsmäßige Ansteuerung der einzelnen Laserdioden quer zu der Längsnaht ein unterschiedliches, einzustellendes Erwärmungs- bzw. Schweißprofil liefert. Um eine schonende Anpassung der Temperatur der Blechteile vor und nach dem Verschweißen im Bereich der zu verschweißenden Längskanten zu erreichen, ist es als bevorzugt anzusehen, die Laseranordnung vor und/oder nach der Verschweißung mit einer Leistung zu betreiben, die kleiner als die für die Verschweißung erforderliche Leistung ist.

Für bestimmte Fälle der verfahrensmäßigen Herstellung von Dosen-Zargen wird ein Vorteil dann erreicht, wenn die herzustellende Längsnaht in Nahtrichtung mindestens in zwei oder drei koordinatenmäßig vorbestimmte Schweißbereiche unterteilt wird. Mittels einer solchen Unterteilung können an den Übergangsstellen zwischen den einzelnen, koordinatenmäßig vorbestimmten Schweißbereichen Sollbruchstellen erzeugt werden, gegebenenfalls durch eine sehr geringfügige Überlappung der einzeln vorbestimmten Schweißbereiche, um z.B. an diesen Stellen in Verbindung mit einem Vorritzen der Rumpfwand eine Öffnungshilfe einzubauen, entlang derer eine gefüllte Dose leicht zu öffnen ist. Ohne eine solche Sollbruchstelle auch im Bereich der verschweißten Dosen-Längsnaht ist es schwierig, einen oberen und einen unteren Teil der Dose voneinander zu trennen, da die verschweißte Längsnaht üblicherweise eine sehr stabile Verbindung darstellt. Durch eine dreifache koordinatenmäßige Unterteilung des Schweißbereichs entlang der Längsnaht können zwei dicht nebeneinanderliegende Sollbruchstellen gebildet werden, die im Bereich zweier um den Dosenumfang umlaufender, eingeritzter Sollbruchstellen liegen, so daß der Dosenstreifen zwischen diesen beiden Sollbruchstellen beim Öffnen der Dose herausgetrennt werden kann, indem er auf einem Hilfsteil spiralförmig aufgewickelt wird. Um die zum Einbau solcher vorstehend angegebenen Sollbruchstellen benötigten zwei oder drei Fokussierungsbereiche zu erzielen, kann eine einzige Diodenlaseranordnung eingesetzt werden, die koordinatenmäßig den zwei oder drei Fokussierungebereichen zugeordnet und nach dem Verschweißen jeweils eines Schweißbereichs verschwenkt wird, um den folgenden Schweißbereich ohne eine Relativbewegung zwischen Dosen-Zarge und Fokussierungsbereich zu beaufschlagen.

Es ist ersichtlich, daß mit einer stationären Verschweißung unter Einsatz einer Diodenlaseranordnung, d.h. mit einer Beibehaltung der koordinatenmäßigen Ausrichtung des Fokussierungsbereichs auf die zu verschweißenden Längskanten während der Verschweißung, sehr hohe Schweißgeschwindigkeiten erzielt werden können, im Gegensatz zu einer Anordnung, bei der der Laserstrahl bzw. der Fokusbereich entlang der Längsnaht verfahren wird bzw. bei der die Dosen-Zarge gegenüber dem Laserstrahl verfahren wird. Um die Zahl der anzubringenden Dosen-Zargen noch zu erhöhen, ist eine Verfahrensweise von Vorteil, bei der die Laseranordnung zwischen mindestens zwei unterschiedlichen Bearbeitungstationen verschwenkt wird, wobei wechselweise ein zylindrischer Dosen-Rohling an der einen Bearbeitungsstation und an der anderen Bearbeitungstation geschweißt wird. Während des Verschweißens der Dosen-Zarge an der einen Bearbeitungsstation kann an der anderen Bearbeitungsstation das vorgeformte Blech einer Dosen-Zarge mit ihren Längskanten koordinatenmäßig ausgerichtet werden. Vorzugsweise wird die Verschwenkung der Laserstrahlung über ein Drehprisma vorgenommen, das getaktet gedreht bzw. verschwenkt wird. Ein solches Drehprisma bringt unter anderem den Vorteil mit sich, daß hierbei durch mehrere im Winkel zueinanderstehende Reflexionsflächen, die optional auch fokusieren, durch kleine Bewegungen des Prismas mehrere Bearbeitungsstationen hintereinander mit dem Laserstrahl beschickt werden können. Auf eine große bewegte Masse und eine Fokusieroptik nach dem Prisma kann somit verzichtet werden. Desweiteren erlaubt ein sich mitdrehendes Prisma der sich bewegenden Dosen-Zarge zu folgen, so daß zwischen Laserfokus und Bearbeitungsstelle keine Relativbewegung erfolgt, während die Strahlquelle ohne Bewegung fest in der Maschine installiert ist. Damit können sich die Zargen gleichförmig bewegen und müssen nicht immer abgestoppt, geschweißt und dann wieder beschleunigt werden.

Es hat sich herausgestellt, daß das Verfahren des Schweißens von Blechzuschnitten entlang der Längskante zum Erstellen eines Dosen-Rohlings in Verbindung mit einer Diodenlaseranordnung mit einer Leistung von 10⁴ bis 10⁶ W/cm² erfolgen sollte, um eine gleichmäßige Längsnaht, auch in Verbindung mit hohen Schweißgeschwindigkeiten, d.h. mit kurzen Schweißzeiten, zu erzielen. Eine Zeitdauer für die Verschweißung mit einer Laserstrahlung dieser Leistung kann getaktet mit Einzel-Schweißimpulsen zwischen 10 bis 500 msec durchgeführt werden.

Weitere Vorteile und Merkmale der Erfindung ergeben sich aus der nachfolgenden Beschreibung von Ausführungsbeispielen anhand der Zeichnung.

In der Zeichnung zeigt
- Figur 1: einen Teil eines rohrförmig Bildzuschnitts mit stumpf aneinanderstoßenden Längskanten, denen auf der Außenseite eine Laserdiodenanordnung zugeordnet ist,
- Figur 2: einen Teil eines rohrförmig gebogenen Blechzuschnitts mit stumpf aneinandergestoßenen Längskanten, denen eine Diodenlaseranordnung zugeordnet ist, die gegenüber der Anordnung nach Figur 1 in zwei Abschnitte entlang der zu verschweißenden Längskanten unterteilt ist,
- Figur 3: eine Dose mit Längsnaht und eingesetztem Bodenteil,
- Figur 4: einen Schnitt durch die Dose nach Figur 2 quer zur Längsnaht,
- Figur 5: die Anordnung nach Figur 1 mit einer zusätzlichen Diodenlaseranordnung auf der Innenseite des rohrförmig gebogenen Blechzuschnitts,
- Figur 6: eine schematische Darstellung einer Bearbeitungsstation mit einer Laserdiodenanordnung, deren Strahlenbündel wechselweise auf vorgeformte, rohrförmige Blechzuschnitte entlang deren aneinanderstoßenden Längskanten an zwei unterschiedlichen Bearbeitungsstationen verschwenkt wird,
- Figur 7: schematisch eine Mehrfachanordnung von einzelnen Laserdioden,
- Figur 8: eine Stapelung einzelner Laserdioden in Form einer Laserdiodenanordnung, und
- Figur 9: schematisch eine Mehrfachanordnung von Laserdioden, deren eine gemeinsame Fokussierungsoptik zur Fokussierung der Strahlung auf die Längsnaht einer Dosenzarge zugeordnet ist.

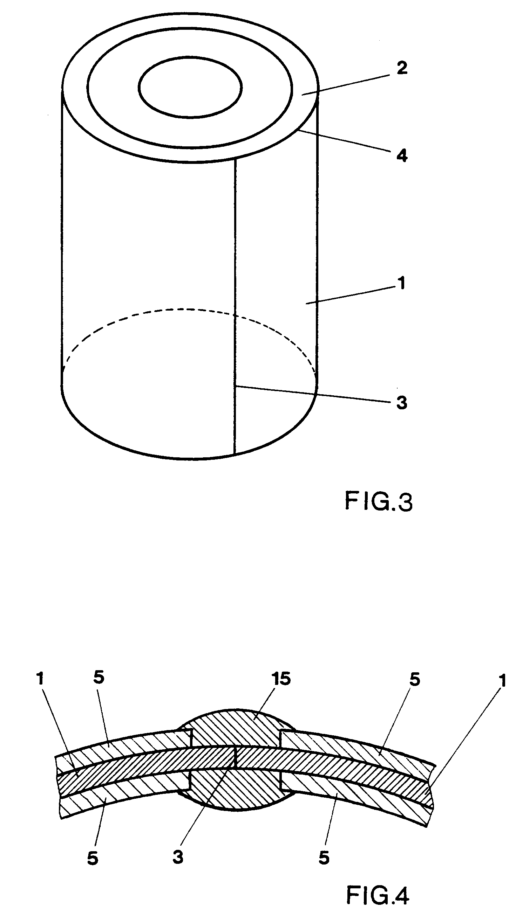

In der Verpackungsindustrie sind Blechdosen weit verbreitet, wie sie schematisch in Figur 3 dargestellt ist, mit einem rohrförmig gebogenen Blechteil 1, einem ebenen, gegebenenfalls mit Rillen profilierten Bodenteil 2 und einem nicht dargestellten Deckelteil, das nach dem Befüllen der Dose aufgesetzt wird. Das rohrförmige Blechteil 2 ist entlang einer Längsnaht 3 verschweißt. Das Bodenteil 2 wird üblicherweise am Rand des rohrförmigen Blechteils 1 durch eine Umbördelung oder Falzung verbunden. Metalldosen sind auf der Innenseite und gegebenenfalls auf der Außenseite beschichtet, beispielsweise durch einen Kunststoffüberzug oder eine Lackschicht 5, wie dies in Figur 4 im Schnitt zu sehen ist.

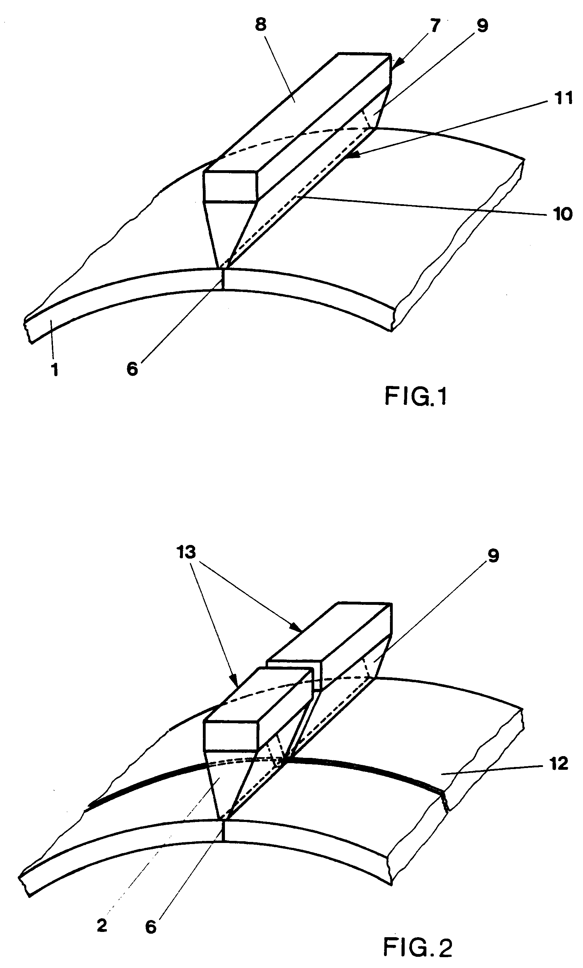

Zum Verschweißen der Längskanten des rohrförmigen Blechteils 1 werden die Stirnkanten 6 des rohrförmig vorgeformten Körpers stumpf aneinanderstoßend in einer Bearbeitungsstation ausgerichtet, wie dies in den Figuren 1, 2 und 5 dargestellt ist. Der Längserstreckung der Stirnkanten ist eine Diodenlaseranordnung 7 zugeordnet, die in den Figuren schematisch dargestellt ist, mit einem Kühlkörper 8, der auf seiner dem rohrförmigen Blechteil 1 zugewandten Seite mehrere Laserdioden trägt, deren Strahlaustrittsflächen so entlang der zu erstellenden Längsnaht 3 ausgerichtet und entlang dieser verteilt sind, daß ein langgestrecktes Strahlenbündel 9 gebildet wird, mit einem schmalen, sich entlang der Stirnkanten 6 erstreckenden Fokussierungsbereich. Hierbei sind in vorteilhafter Ausführung die Laserdioden, die einen elliptischen Strahlenquerschnitt besitzen, mit den jeweiligen großen Achsen in Richtung der zu bildenden Längsnaht 3 ausgerichtet, während die kleinen Achsen quer zu der Längsnaht 3 verlaufen, so daß bereits nur durch die entsprechende Anordnung und Ausrichtung der einzelnen Laserdioden der zum gezielten Verschweißen der Stirnkanten 6 des rohrförmigen Blechteils 1 miteinander erforderliche langgestreckte Fokussierungsbereich 10 erhalten wird. Gegebenenfalls können zusätzliche transmittive Fokussierungsanordnungen eingesetzt werden, um die Diodenlaserstrahlung auf den Fokussierungsbereich entlang der Stirnkanten 6 zu richten. Während des Schweißvorgangs werden das rohrförmige Blechteil 1 und die Laserdiodenanordnung 7 bzw. deren Strahlenbündel 9 in ihren zuvor festgelegten Koordinaten unverändert belassen, so daß eine stationäre Verschweißung ohne eine Relativbewegung zwischen dem rohrförmigen Blechteil 1 und dem Strahlenbündel 9 erfolgt. Die Verschweißung wird mit sehr kurzen Schweißimpulsen mit einer Leistung im Bereich von 10⁴ bis 10⁶ W/cm², deren Länge je nach eingestellter Leistung und der Dicke des Bleches des rohrförmigen Blechteils 10 bis 500 Millisekunden beträgt. Nach der Verschweißung eines rohrförmigen Blechteils 1 wird dieses aus der Bearbeitungsstation entnommen und ein ungeschweißtes, rohrförmiges Blechteil 1 mit seinen stumpf gegeneinander ausgerichteten Stirnkanten 6 koordinatenmäßig dem Fokussierungsbereich 10 der Laserdiodenanorndung 7 zugeordnet.

Durch eine zusätzliche Optik bzw. durch eine Anordnung, mit der die Laserdiodenanorndung 7 in ihrem Abstand zu der Oberseite des rohrförmigen Blechteils 1 verschoben werden kann, kann der Fokussierungsbereich quer zu der zu erstellenden Längsnaht 3 aufgeweitet werden, um vor und/oder nach dem eigentlichen Schweißvorgang die Randzonen des Blechteils 1 zu erwärmen, um einen zu großen Temperatursprung in dem Blechteil auf die Schweißtemperatur zu vermeiden; gleiches gilt nach dem Verschweißen der Stirnkanten 6 miteinander, so daß eine schonendere Abkühlung erfolgt.

Figur 2 zeigt Ausschnittsweise ein rohrförmiges Blechteil 1 ähnlich der Figur 1, wobei das Blechteil an seiner Außenseite geringfügig angeritzt ist, so daß um den Umfang herum eine Kerbe 12 verläuft, die für ein späteres Öffnen der Dosen eine Sollbruchstelle bildet. Um eine solche Sollbruchstelle auch entlang der zu bildenden Längsnaht 3 zu erhalten, ist die Laserdiodenanordnung 7 der Figur 1 in zwei einzelne Laserdiodenanordnungen 13 unterteilt, die jeweils ein Strahlenbündel 9 beidseitig der Kerbe 12 auf die Stirnkanten 6 des rohrförmigen Blechteils 1 richten. Die Strahlenbündel 9 können im Bereich der Kerbe 12 geringfügig überlappen, sie sind jedoch hinsichtlich ihrer Strahlungsleistung so eingestellt, daß sie im Bereich der Kerbe 12 geringer ist als entlang der sich beidseitig der Kerbe 12 erstreckenden Stirnkanten 6, so daß auch nach dem Verschweißen der Stirnkanten 6 entlang der Längsnaht 3 im Schnittpunkt mit der Kerbe 12 eine Sollbruchstelle verbleibt.

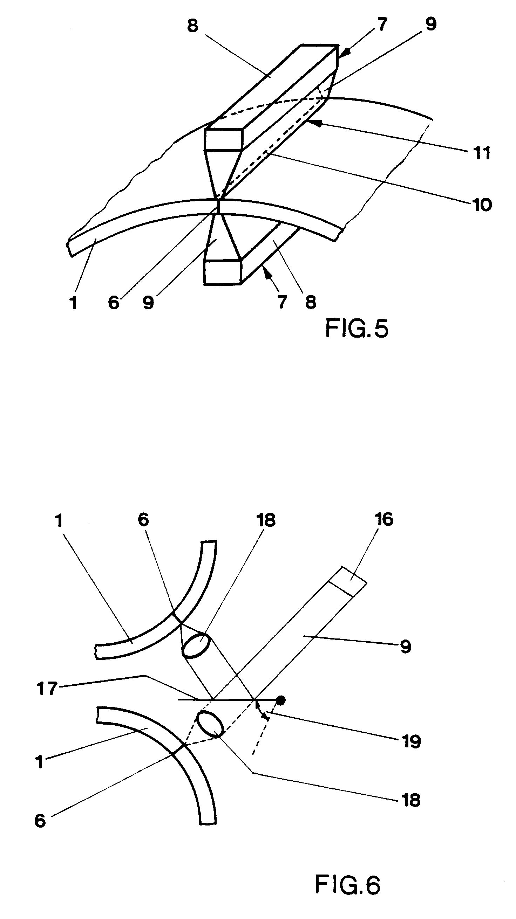

In Figur 5 ist eine schematische Anordnung dargestellt, bei der gegenüber der Anordnung nach Figur 1 auf der Innenseite des rohrförmigen Blechteils eine weitere Laserdiodenanorndung positioniert ist, deren Strahlenbündel 9 an der Unterseite auf die Stirnkanten 6 gerichtet ist. Mit einer solchen Anordnung kann eine gleichzeitige Verschweißung der Stirnkanten 6 des rohrförmigen Blechteils 1 beidseitig der Stirnkanten 6, d. h. von der Innenseite und von der Außenseite, erfolgen. Da üblicherweise auf der Innenseite eines solchen vorgeformten rohrförmigen Blechteils 1 nur wenig Freiraum verbleibt, kann eine Laseranordnung geringerer Leistung auf der Innenseite des rohrförmigen Blechteils 1 eingesetzt werden, um sie unmittelbar in den Innenraum des vorgeformten, rohrförmigen Blechteils einzuführen. Da eine Laserdiodenanordnung mit einer Vielzahl von einzelnen Laserdioden gezielt in einer langgestreckten Anordnung aufgebaut werden kann, kann die Laserstrahlung durch die Anordnung der Laserdiodenanordnung in den Innenraum des rohrförmigen Dosenrohlings eingesetzt werden. Die äußere Laserdiodenanordnung 8 und die innere Laserdiodenanordnung 14 werden vorzugsweise gleichzeitig beim Schweißvorgang betrieben. Nachdem das rohrförmige Blechteil entlang der Stirnkanten 6 verschweißt ist, kann, wie dies in der Figur 4 zu sehen ist, entlang der Längsnaht 3 auf der Innen- und auf der Außenseite eine Abdeckung der Naht mit einem Flüssiglack 15 erfolgen, so daß zusammen mit den Lackschichten 5 das rohrförmige Blechteil 1 vollständig abgedeckt ist.

Da durch die stationäre Ausrichtung des Strahlenbündels zu den Stirnkanten 6 beim Verschweißen nur sehr kurze Schweißzeiten erforderlich sind, kann zur Erhöhung der Prozeßgeschwindigkeit mit den angegebenen Anordnungen eine Bearbeitungsstation aufgebaut werden, wie sie schematisch in Figur 6 dargestellt ist. Bei dieser Anordnung wird mit einer Laserdiodenanordnung 10 der langgestreckte Diodenlaserstrahl über eine verschwenkbare Optik, beispielsweise ein planarer Spiegel 17, zwischen zwei koordinatenmäßig fest ausgerichteten, rohrförmigen Blechteilen 1 verschwenkt. In dieser Anordnung ist das eine rohrförmige Blechteil 1 derart ausgerichtet, daß das Strahlenbündel 9 der Laserdiodenanordnung 16 unmittelbar auf die Stirnkanten 6, gegebenenfalls mit einer zusätzlichen Fokussierungsoptik 18, gerichtet wird (der Spiegel 17 ist hierbei in die mit unterbrochener Linie dargestellten Stellung verschwenkt, während er zum Verschweißen der Stirnkanten 6 des anderen rohrförmigen Blechteils 1 um einen Winkel 19 in den Strahlengang geschwenkt wird), so daß das Strahlenbündel auf dessen Stirnkanten 6 fällt. Getaktet werden wechselweise die vorgeformten, rohrförmigen Blechteile 1 an den beiden Bearbeitungsstationen verschweißt. An den jeweiligen Bearbeitungsstationen können die einzelnen rohrförmigen Blechteile 1 wiederum auf Trommelanordnungen gehalten werden, die sich getaktet derart drehen, daß die jeweiligen Stirnkanten 6 der einzelnen auf der Trommel festgelegten rohrförmigen Blechteile 1 koordinatenmäßig zu dem Fokussierungsbereich des Strahlenbündels 9 der Laserdiodenanordnung 16 ausgerichtet positioniert werden. Anstelle des Spiegels 17 kann ein Dreh-Prisma eingesetzt werden. Dieses ist besonders dann ein Vorteil, wenn mehr als eine Bearbeitungsstation gleichzeitig von einer Laseranordnung bedient wird. Weiterhin können der Spiegel 17 oder ein eingesetztes Prisma über einen geeigneten Antrieb bei einem bewegten Dosenrohling mitgeführt werden, so daß keine Relativbewegung zwischen Rohling bzw. Längsnaht und dem Fokussierungsbereich auftritt.

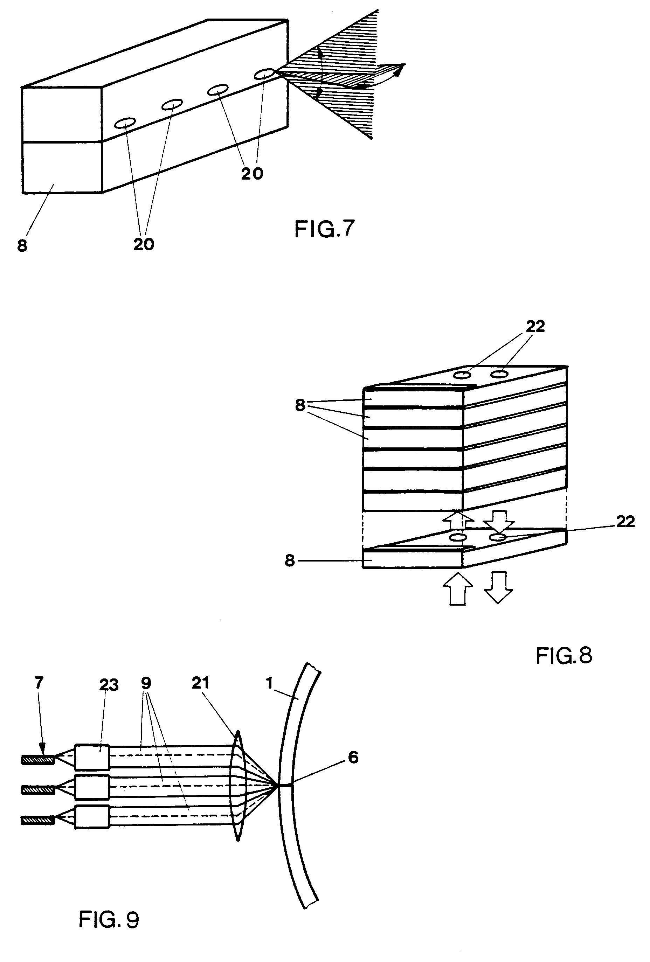

In Figur 7 ist schematisch eine Mehrfachanordnung von einzelnen Laserdioden bzw. Laseremittern 20 dargestellt, die auf dem gemeinsamen Kühlkörper 8 aufgebaut sind. Aus den einzelnen Austrittsfenstern tritt ein Strahl aus, wie er schematisch an dem oberen, hinteren Laseremitter 20 angedeutet ist. Die Strahlkegel der einzelnen Laseremitter 20 ergänzen sich demzufolge zu einem langgestreckten Laserstrahl, der beispielsweise, wie es in Figur 9 gezeigt ist, durch eine Fokussierungslinse 21 auf die Stirnkanten 6 bzw. auf die Stelle der Längsnaht 3 fokusiert werden kann. Die Mehrfachanordnung der Laserdioden der Figur 7, die auch als Laserdiodenbarren bezeichnet wird, besitzt eine Länge von etwa 10 mm, eine Breite von 0,6 mm und eine Höhe von 0,1 mm, wobei auf diese Größe bis zu 800 einzelner Laserdioden angeordnet sein können. Die einzelnen Laseremitter 20 können eine Strahlfläche in der Größenordnung von 1 x 3 um² besitzen mit Divergenzwinkeln im Bereich von 1000 mrad in der Ebene orthogonal zu der Reihe der einzelnen Laserdioden 20 und etwa 200 mrad in der parallelen Ebene. Die maximal erreichbare Leistung der einzelnen Laserdioden liegt in der Größenordnung von 60 mWatt, woraus sich für die vorstehend genannte Größe der Strahlenfläche von etwa 1 um x 3 um eine Leistungsdichte von etwa 2 x 10⁶ Watt pro cm² ergibt. Die einzelnen Laserdioden können auf diese Weise beliebig miteinander kombiniert werden, um durch die relative Anordnung der Laserdioden zueinander einerseits einen erwünschten, langgestreckten Strahlquerschnitt zu erhalten, und andererseits die zum Schweißen erforderlichen hohen Leistungsdichten zu erreichen.

Figur 8 zeigt die Kombination der einzelnen Laserdioden zu einem Stapel, die durch Kühlkörper 8 voneinander getrennt sind. Die Kühlelemente bzw. Kühlkörper 8 haben hierbei eine Dicke von etwa 0,3 bis 2 mm. Weiterhin sind Öffnungen 22 vorgesehen, durch die ein flüssiges oder gasförmiges Kühlmittel zur Abführung der beim Betrieb der Laserdioden entstehenden Wärme geführt werden kann. Mit dieser Stapeltechnik kann ebenfalls eine sehr hohe Packungsdichte von bis zu 25.000 einzelner Laserdioden pro cm² erreicht werden.

In Figur 9 ist eine Anordnung aus drei übereinandergestapelten Laserarrays gezeigt, deren divergierende Strahlung durch eine Kollimation 23 zu einem parallelen Strahlenbündel geformt und durch eine Fokussierungslinse 21 auf die Stirnkanten 6 der Dosen-Zarge gerichtet werden.

## Patentansprüche

1. Verfahren zum Herstellen von röhrenförmigen Rohlingen aus Fein- oder Feinstblech, insbesondere von zylindrischen Dosen-Rohlingen bzw. Zargen, bei dem zwei Längskanten eines vorgeformten Blechs zueinander ausgerichtet und in Bezug zu einem Fokussierungsbereich einer Laseranordnung positioniert und anschließend diese ausgerichteten Längskanten durch Beaufschlagung von Laserstrahlung unter Bildung einer Längsnaht miteinander verschweißt werden, dadurch gekennzeichnet, daß die Verschweißung mit einem im Fokussierungsbereich langgestreckten Diodenlaserstrahl, dessen Länge einem Vielfachen seiner Breite im Fokussierungsbereich entspricht, von der Außen- und/oder Innenseite aus durchgeführt wird.

2. Verfahren nach Anspruch 1, dadurch gekennzeichnet, daß die Längserstreckung des Strahlquerschnitts in Richtung der Längsnaht ausgerichtet wird, und daß während der Verschweißung die vorgegebenen Koordinaten sowohl der Längskanten des Blechs als auch des Fokussierungsbereichs relativ zueinander beibehalten werden.

3. Verfahren nach Anspruch 1 oder 2, dadurch gekennzeichnet, daß vor der Verschweißung die zwei Längskanten stumpf aneinanderstoßend ausgerichtet werden.

4. Verfahren nach Anspruch 1 bis 3, dadurch gekennzeichnet, daß Nachbarbereiche der Längskanten bzw. der Längsnaht vor, während und/oder nach der Verschweißung einer Erwärmung unterworfen werden.

5. Verfahren nach Anspruch 4, dadurch gekennzeichnet, daß zur Erwärmung und zur Verschweißung Laserstrahlung derselben Laseranordnung beaufschlagt wird.

6. Verfahren nach Anspruch 4, dadurch gekennzeichnet, daß zur Erwärmung eine gesonderte, von der Laseranordnung für das Verschweißen unabhängige Erwärmungseinrichtung eingesetzt wird.

7. Verfahren nach einem der Ansprüche 4 oder 5, dadurch gekennzeichnet, daß im Fokussierungsbereich die Diodenlaserstrahlung quer zu der zu bildenden Längsnaht in einen hochenergetischen Schweiß-Strahlungsbereich und beidseitig dazu in einen Erwärmungs-Strahlungsbereich geringerer Energie aufgeteilt wird.

8. Verfahren nach einem der Ansprüche 4 bis 7, dadurch gekennzeichnet, daß vor und/oder nach der Verschweißung die Laseranordnung mit einer Leistung betrieben wird, die kleiner als die für die Verschweißung erforderliche Leistung ist.

9. Verfahren nach einem der Ansprüche 1 bis 6, dadurch gekennzeichnet, daß die herzustellende Längsnaht in Nahtrichtung in mindestens zwei koordinatenmäßig vorbestimmte Schweißbereiche unterteilt ist, die gleichzeitig oder nacheinander mit Laserstrahlung beaufschlagt werden.

10. Verfahren nach Anspruch 9, dadurch gekennzeichnet, daß die Längsnaht in drei koordinatenmäßig vorbestimmte Schweißbereiche unterteilt ist.

11. Verfahren nach Anspruch 9 oder 10, dadurch gekennzeichnet, daß entlang der Längsnaht zwischen den einzelnen Schweißbereichen Sollbruchstellen vorgesehen werden, indem diese Bereiche mit geringer Strahlleistung beaufschlagt werden.

12. Verfahren nach einem der Ansprüche 9 bis 11, dadurch gekennzeichnet, daß zur Verschweißung der Schweißbereiche nur eine einzige Laseranordnung benutzt wird, deren Fokussierungsbereich vor der Verschweißung koordinatenmäßig jeweils auf die Schweißbereiche positioniert wird.

13. Verfahren nach einem der Ansprüche 1 bis 12, dadurch gekennzeichnet, daß zur Verschweißung der Schweißbereiche nur eine einzige Laseranordnung benutzt wird, die zwei oder drei Fokussierungsbereiche aufweist, die vor der Verschweißung koordinatenmäßig jeweils auf Schweißbereiche der zu schweißenden Naht positioniert werden.

14. Verfahren nach einem der Ansprüche 9 bis 13, dadurch gekennzeichnet, daß die Schweißbereiche In Nahtrichtung in ihren Koordinaten geringfügig überlappend ausgerichtet werden.

15. Verfahren nach einem der Ansprüche 3 bis 14, dadurch gekennzeichnet, daß für die Erwärmung und die Verschweißung verschiedene Diodenlaser und/oder Diodenlaseranordnungen eingesetzt werden.

16. Verfahren nach Anspruch 15, dadurch gekennzeichnet, daß die unterschiedlichen Diodenlaser und/oder Diodenlaseranordnungen mit unterschiedlicher Leistung betrieben werden.

17. Verfahren nach einem der Ansprüche 3 bis 16, dadurch gekennzeichnet, daß die Leistung der Laseranordnung im Bereich der zu bildenden Längsnaht während der Laserstahlerwärmung zunächst unterhalb der Leistung für den Schweißvorgnag gehalten wird und nach einer vorgegebenen Erwärmungszeitdauer auf die Schweißleistung heraufgesetzt wird.

18. Verfahren nach einem der Ansprüche 3 bis 17, dadurch gekennzeichnet, daß die Laseranordnung im Bereich der zu bildenden Längsnaht nach der Verschweißung auf eine einer Nachwärmung entsprechenden Leistung herabgesetzt wird.

19. Verfahren nach einem der Ansprüche 1 bis 18, dadurch gekennzeichnet, daß die Laseranordnung bzw. die Laserstrahlung zwischen mindestens zwei unterschiedlichen Bearbeitungsstationen verschwenkt wird, wobei wechselweise ein zylindrischer Dosen-Rohling an der einen Bearbeitungsstation und an der anderen Bearbeitungststaion geschweißt wird.

20. Verfahren nach Anspruch 19, dadurch gekennzeichnet, daß die Laserstrahlung zwischen den mindestens zwei unterschiedlichen Bearbeitungsstationen über ein schwenkbar gelagertes Strahlführungssystem verschwenkt wird.

21. Verfahren nach Anspruch 20, dadurch gekennzeichnet, daß die Verschwenkung über ein Drehprisma als Teil des Strahlführungssystems vorgenommen wird.

22. Verfahren nach Anspruch 20 oder 21, dadurch gekennzeichnet, daß der Dosenrohling während des Schweißens geführt und hierbei im Fokussierungsbereich nach- bzw. mitgeführt wird.

23. Verfahren nach einem der Ansprüche 1 bis 22, dadurch gekennzeichnet, daß das Verschweißen mit einer Leistung von 10⁴ bis 10⁶ W/cm² erfolgt.

24. Verfahren nach einem der Ansprüche 1 bis 23, dadurch gekennzeichnet, daß zum Verschweißen die Laserstrahlung für eine Zeitdauer 10 bis 500 Millisekunden beaufschlagt wird.

## Claims

1. Process for manufacturing tubular blanks from thin sheet steel or black plate, in particular cylindrical can blanks or can bodies, in which two longitudinal edges of a preshaped steel sheet are aligned with each other and positioned in relation to a focusing area of a laser array and these aligned longitudinal edges are subsequently welded to each other, forming a longitudinal seam, by applying laser radiation, characterized in that the welding is carried out from the outside and/or inside using a diode-laser beam which is elongated in the focusing area and whose length corresponds to a multiple of its width in the focusing area.

2. Process according to Claim 1, characterized in that the longitudinal extent of the beam cross-section is aligned in the direction of the longitudinal seam, and in that during the welding the predefined coordinates both of the longitudinal edges of the steel sheet and of the focusing area are maintained in relation to one another.

3. Process according to Claim 1 or 2, characterized in that, before the welding, the two longitudinal edges are aligned such that they butt against each other at an obtuse angle.

4. Process according to Claims 1 to 3, characterized in that regions adjacent to the longitudinal edges or to the longitudinal seam are subjected to heating before, during and/or after the welding.

5. Process according to Claim 4, characterized in that laser radiation from the same laser array is applied for the purpose of heating and for the purpose of welding.

6. Process according to Claim 4, characterized in that a separate heating device, which is independent of the laser array for the welding, is used for the purpose of heating.

7. Process according to one of Claims 4 or 5, characterized in that in the focusing area the diode-laser radiation is split, transversely in relation to the longitudinal seam to be formed, into a high-energy welding-radiation region and, on either side thereof, into a heating-radiation region of lower energy.

8. Process according to one of Claims 4 to 7, characterized in that, before and/or after the welding, the laser array is operated at a power which is lower than the power required for the welding.

9. Process according to one of Claims 1 to 6, characterized in that the longitudinal seam to be produced is subdivided in the seam direction into at least two welding regions whose coordinates are predetermined and to which laser radiation is applied simultaneously or successively.

10. Process according to Claim 9, characterized in that the longitudinal seam is subdivided into three welding regions whose coordinates are predetermined.

11. Process according to Claim 9 or 10, characterized in that intended breakage points are provided along the longitudinal seam, between the individual welding regions, by applying low radiation power to these regions.

12. Process according to one of Claims 9 to 11, characterized in that, for the purpose of welding the welding regions, only a single laser array is used, whose focusing region has its coordinates in each case positioned onto the welding regions, before the welding.

13. Process according to one of Claims 1 to 12, characterized in that, for the purpose of welding the welding regions, only a single laser array is used, which has two or three focusing areas whose coordinates are in each case positioned onto the welding regions of the seam to be welded, before the welding.

14. Process according to one of Claims 9 to 13, characterized in that the welding regions are aligned with their coordinates overlapping slightly in the seam direction.

15. Process according to one of Claims 3 to 14, characterized in that different diode lasers and/or diode-laser arrays are used for the heating and the welding.

16. Process according to Claim 15, characterized in that the different diode lasers and/or diode-laser arrays are operated at different powers.

17. Process according to one of Claims 3 to 16, characterized in that, in the region of the longitudinal seam to be formed, the power of the laser array is initially kept below the power for the welding operation during the laser beam heating and, following a predefined heating time duration, is raised to the welding power.

18. Process according to one of Claims 3 to 17, characterized in that, after the welding, the laser array is reduced to a power corresponding to a post-heating in the region of the longitudinal seam to be formed.

19. Process according to one of Claims 1 to 18, characterized in that the laser array or the laser radiation is pivoted between at least two different machining stations, a cylindrical can blank being alternately welded at one machining station and at the other machining station.

20. Process according to Claim 19, characterized in that the laser radiation is pivoted between the at least two different machining stations via a pivotally mounted beam guidance system.

21. Process according to Claim 20, characterized in that the pivoting is performed via a rotating prism as part of the beam guidance system.

22. Process according to Claim 20 or 21, characterized in that the can blank is guided during the welding and in this case is tracked or concomitantly guided in the focusing region.

23. Process according to one of Claims 1 to 22, characterized in that the welding is carried out using a power from 10⁴ to 10⁶ W/cm².

24. Process according to one of Claims 1 to 23, characterized in that for the purpose of welding the laser radiation is applied for a time duration of 10 to 500 milliseconds.

## Revendications

1. Procédé de production d'ébauches tubulaires en tôle mince ou en tôle noire, notamment d'ébauches de boîtes cylindriques ou de corps de boîte, avec lequel deux bords longitudinaux d'une tôle préformée sont alignés l'un sur l'autre et positionnés par rapport à une zone de concentration d'un arrangement à laser et ces bords longitudinaux alignés sont ensuite soudés ensemble en formant un cordon longitudinal par l'application d'un rayonnement laser, caractérisé par le fait que le soudage est effectué à partir du côté extérieur et/ou intérieur avec un rayon de diode laser projeté en longueur dans la zone de concentration, la longueur de celui-ci correspondant à un multiple de sa largeur dans la zone de concentration.

2. Procédé selon la revendication 1, caractérisé par le fait que la projection longitudinale de la section du rayon est dirigée dans le sens du cordon longitudinal, et que pendant le soudage les coordonnées prédéfinies aussi bien des bords longitudinaux de la tôle que de la zone de concentration sont maintenues constantes les unes par rapport aux autres.

3. Procédé selon la revendication 1 ou 2, caractérisé par le fait que les deux bords longitudinaux sont alignés bout à bout l'un sur l'autre avant le soudage.

4. Procédé selon les revendications 1 à 3, caractérisé par le fait que les zones voisines des bords longitudinaux ou du cordon longitudinal sont soumises à un échauffement avant, pendant et/ou après le soudage.

5. Procédé selon la revendication 4, caractérisé par le fait que c'est le rayon laser issu du même arrangement à laser qui est appliqué pour l'échauffement et pour le soudage.

6. Procédé selon la revendication 4, caractérisé par le fait qu'un dispositif d'échauffement spécial indépendant de l'arrangement à laser pour le soudage est utilisé pour l'échauffement.

7. Procédé selon l'une des revendications 4 ou 5, caractérisé par le fait que dans la zone de concentration le rayonnement de la diode laser est divisé en une zone de rayonnement de soudage à haute énergie en travers du cordon longitudinal à former et des deux côtés de celui-ci en une zone de rayonnement d'échauffement d'énergie plus faible.

8. Procédé selon l'une des revendications 4 à 7, caractérisé par le fait qu'avant et/ou après le soudage l'arrangement à laser est utilisé à une puissance qui est inférieure à la puiseance nécessaire pour le soudage.

9. Procédé selon l'une des revendications 1 à 6, caractérisé par le fait que le cordon longitudinal à réaliser est divisé dans le sens du cordon en au moins deux zones de soudage de coordonnées prédéfinies qui sont exposées simultanément ou successivement au rayonnement laser.

10. Procédé selon la revendication 9, caractérisé par le fait que le cordon longitudinal est divisé en trois zones de soudage de coordonnées prédéfinies.

11. Procédé selon la revendication 9 ou 10, caractérisé par le fait que le long du cordon longitudinal entre chacune des zones de soudage sont prévus des points de rupture voulus en exposant ces zones à une puissance de rayonnement inférieure.

12. Procédé selon l'une des revendications 9 à 11, caractérisé par le fait que pour souder les zones de soudage on n'utilise qu'un seul arrangement à laser dont la zone de concentration est à chaque fois positionnée sur les coordonnées des zones de soudage avant le soudage.

13. Procédé selon l'une des revendications 1 à 12, caractérisé par le fait que pour souder les zones de soudage on n'utilise qu'un seul arrangement à laser qui présente deux ou trois zones de concentration, lesquelles sont chacune positionnées sur les coordonnées des zones de soudage du cordon à souder avant le soudage.

14. Procédé selon l'une des revendications 9 à 13, caractérisé par le fait que les zones de soudage, par leurs coordonnées, sont alignées de manière à se chevaucher légèrement dans le sens du cordon.

15. Procédé selon l'une des revendications 3 à 14, caractérisé par le fait que des diodes laser et/ou des arrangements à laser différents sont utilisés pour l'échauffement et le soudage.

16. Procédé selon la revendication 15, caractérisé par le fait que les différentes diodes laser et/ou arrangements à laser sont utilisés à des puissances différentes.

17. Procédé selon l'une des revendications 3 à 16, caractérisé par le fait que la puissance de l'arrangement à laser dans la zone du cordon longitudinal à former est initialement maintenue inférieure à la puissance du processus de soudage pendant l'échauffement du rayon laser et qu'elle est ensuite relevée à la puissance de soudage après un temps d'échauffement prédéfini.

18. Procédé selon l'une des revendications 3 à 17, caractérisé par le fait que l'arrangement à laser, dans la zone du cordon longitudinal à former, est réduit après le soudage à une puissance correspondant à un réchauffage.

19. Procédé selon l'une des revendications 1 à 18, caractérisé par le fait que l'arrangement à laser ou le rayonnement laser est balayé entre au moins deux postes d'usinage différents, une ébauche de boîte cylindrique étant soudée alternativement sur l'un des postes d'usinage et sur l'autre poste d'usinage.

20. Procédé selon la revendication 19, caractérisé par le fait que le rayonnement laser est balayé entre les au moins deux postes d'usinage différents par le biais d'un système de guidage du rayon monté de manière à pouvoir pivoter.

21. Procédé selon la revendication 20, caractérisé par le fait que le balayage est effectué par le biais d'un prisme rotatif faisant partie du système de guidage du rayon.

22. Procédé selon la revendication 20 ou 21, caractérisé par le fait que l'ébauche de boîte est guidée pendant le soudage et y est entraînée ou poursuivie dans la zone de concentration.

23. Procédé selon l'une des revendications 1 à 22, caractérisé par le fait que le soudage est effectué avec une puissance comprise entre 10⁴ et 10⁶ W/cm².

24. Procédé selon l'une des revendications 1 à 23, caractérisé par le fait que pour le soudage le rayonnement laser est appliqué pendant une durée comprise entre 10 et 500 millisecondes.
